# EUROPÄISCHE PATENTSCHRIFT

(11) **EP 2 995 183 B1**
(45) Veröffentlichungstag und Bekanntmachung des Hinweises auf die Patenterteilung: **15.05.2019**
(21) Anmeldenummer: 15181013.2
(22) Anmeldetag: 13.08.2015
(51) Int. Cl.: A01C 3/00, C05F 3/06, F26B 11/00, G01G 11/00

(54) **DOSIERVORRICHTUNG**
METERING DEVICE
DISPOSITIF DE DOSAGE

(30) Priorität: 12.09.2014 DE 202014007282 U
(43) Veröffentlichungstag der Anmeldung: 16.03.2016
(73) Patentinhaber: Big Dutchman International GmbH, 49377 Vechta (DE)
(72) Erfinder: HALBRITTER, Lars, 49393 Lohne (DE)
(74) Vertreter: Eisenführ Speiser

(56) Entgegenhaltungen:
- ES-A1- 2 449 667
- NL-A- 9 400 025

## Beschreibung

Die Erfindung betrifft eine Dosiervorrichtung zum Dosieren eines Gutes, insbesondere eines zu trocknenden Gutes wie ein Gärsubstrat oder Kot, umfassend eine Fördervorrichtung zur Förderung von zu trocknendem Gut in einer Förderrichtung, wobei auf die Fördervorrichtung zu trocknendes Gut von einer Zufuhreinrichtung zugeführt werden kann und wobei die Fördervorrichtung zu trocknendes Gut an eine nachgelagerte Einheit, wie beispielsweise eine Trocknungsvorrichtung, abgeben kann, und eine Steuereinheit, die ausgebildet ist, eine Fördergeschwindigkeit der Fördervorrichtung zu steuern.

Die Erfindung betrifft ferner ein Verfahren zum Dosieren eines Gutes, insbesondere eines zu trocknenden Gutes wie ein Gärsubstrat oder Kot, umfassend Fördern von auf eine Fördervorrichtung zugeführtem zu trocknendem Gut in einer Förderrichtung, und Steuern einer Fördergeschwindigkeit der Fördervorrichtung.

Dosiervorrichtungen und Verfahren der Eingangs genannten Art sind beispielsweise aus der DE 198 51 793 und der der DE 20 2008 003 498 U1 bekannt und werden insbesondere für den Trocknungsprozess von Frischkot aus Legehennenställen oder Gärsubstraten aus Biogasanlagen verwendet. Die Trocknung derartiger Güter ist die Voraussetzung dafür, dass man diese gut lagern und weiter vermarkten kann. Für die Trocknung werden vorzugsweise Trocknungstunnel verwendet, in welche Luft, beispielsweise die warme Abluft aus einem Legehennenstall, über Ventilatoren in einen Druckkorridor geleitet wird. Über und neben dem Druckkorridor sind mehreren Etagen perforierter Trocknungsbänder angeordnet, so dass die Abluft durch seitliche Öffnungen in den Trocknungstunnel einströmen und durch die Perforationen hindurchströmen kann, wodurch dem Gut Feuchtigkeit entzogen und das Gut getrocknet wird. Die Trocknung kann in einem geschlossenen Raum stattfinden, wenn die vom Trocknungstunnel abgegebene Luft gefiltert werden soll, wodurch die Möglichkeit geschaffen wird, den Trocknungsprozess weitgehend geruchsneutral zu gestalten. Voraussetzung für eine optimale Trocknung ist, dass die Bänder möglichst gleichmäßig mit dem zu trocknenden Gut beladen werden. Zur Beladung der Trocknungsbänder wird das zu trocknende Gut üblicherweise über Zuführbänder zu einer Dosiervorrichtung gefördert, die sich meist an der obersten Etage des Trocknungstunnels befindet. Von der Dosiervorrichtung wird das Gut auf das oberste Trocknungsband abgegeben und weiter über die tieferen Etagen des Trocknungstunnels gefördert, so dass das Gut beim Austritt aus dem Trocknungstunnel einen möglichst hohen Trockensubstanzgehalt aufweist. Das getrocknete Gut kann dann weiter transportiert und gelagert werden kann, ohne dass es zu einer Geruchsbelästigung kommt oder diese zumindest reduziert wird. Aus der ES 2 449 667 A1 ist eine Kottrocknungsanlage mit einem oberen Wagen bekannt, die eine in einer horizontalen Ebene bewegliche Fördervorrichtung aufweist. Aus der NL 9 400 025 A ist ein Trocknungstunnel, insbesondere für Geflügelmist, bekannt, in dem eine Anzahl von Förderbändern angeordnet sind.

Zur Beladung beispielsweise eines Trocknungsbandes einer Trocknungsvorrichtung weisen Dosiervorrichtungen, welche aus dem Stand der Technik bekannt sind, Abschnitte auf, die bei Vorhandensein eines bestimmten Massewertes der Masse welche sich auf dem Abschnitt befindet, die Zufuhr oder die Abfuhr des Gutes stoppen, um somit eine gleichmäßige Beladung des Trocknungsbandes zu erreichen. Solche Dosiervorrichtungen und -verfahren ermöglichen es, die Dosierung an verschiedene Anforderungen anzupassen und eine die Antriebe der Förderbänder schonende Steuerung zu realisieren. Es besteht jedoch Bedarf nach weiter verbesserten Dosiervorrichtungen und -verfahren.

Es ist daher eine Aufgabe der vorliegenden Erfindung, eine Dosiervorrichtung und ein Verfahren zum Dosieren eines Gutes, insbesondere eines zu trocknendes Gutes wie ein Gärsubstrat oder Kot, bereitzustellen, welche eine verbesserte und/oder vereinfachte Dosierung ermöglichen. Insbesondere ist es eine Aufgabe der vorliegenden Erfindung, eine Dosiervorrichtung und ein Verfahren zum Dosieren eines Guten, insbesondere eines zu trocknenden Gutes wie ein Gärsubstrat oder Kot, bereitzustellen, welche eine besonders gleichmäßige und/oder exakte Dosierung ermöglichen.

Diese Aufgabe wird erfindungsgemäß gelöst durch eine Dosiervorrichtung zum Dosieren eines Gutes, insbesondere eines zu trocknenden Gutes wie ein Gärsubstrat oder Kot, umfassend eine Fördervorrichtung zur Förderung von zu trocknendem Gut in einer Förderrichtung, wobei auf die Fördervorrichtung zu trocknendes Gut von einer Zufuhreinrichtung zugeführt werden kann und wobei die Fördervorrichtung zu trocknendes Gut an eine nachgelagerte Einheit, wie beispielsweise eine Trocknungsvorrichtung, abgeben kann, und eine Steuereinheit, die ausgebildet ist, eine Fördergeschwindigkeit der Fördervorrichtung zu steuern, wobei die Fördervorrichtung um eine vertikale Schwenkachse schwenkbar angeordnet ist, dadurch gekennzeichnet, dass die Steuereinheit angeordnet und ausgebildet ist, eine Pendelbewegung, vorzugsweise eine Geschwindigkeit, insbesondere eine Winkelgeschwindigkeit, und/oder eine Frequenz der Pendelbewegung, der Fördervorrichtung um die Schwenkachse zu steuern, dadurch gekennzeichnet, dass die Steuereinheit ausgebildet ist, die Geschwindigkeit der Pendelbewegung der Fördervorrichtung so zu steuern, dass die Geschwindigkeit der Pendelbewegung der Fördervorrichtung im Bereich der Umkehrpunkte einer Bewegungsbahn der Pendelbewegung größer ist als zwischen den Umkehrpunkten.

Die Erfindung beruht unter anderem auf der Erkenntnis, dass es zum Erzielen einer möglichst gleichmäßigen Verteilung des zu trocknenden Gutes auf einer der Dosiervorrichtung nachgelagerten Einheit, wie beispielsweise einer Trocknungsvorrichtung, vorteilhaft ist, wenn nicht nur die Geschwindigkeit der Fördervorrichtung durch eine Steuereinheit gesteuert wird, sondern auch eine Schwenk- bzw. Pendelbewegung der Fördervorrichtung um eine vertikale Schwenkachse.

Die Fördervorrichtung der Dosiervorrichtung kann beispielsweise als Bandförderer mit einem Endlosförderband ausgebildet sein, auf dessen Obertrum das zu trocknende Gut von einer Zufuhreinrichtung zugeführt wird und über dessen in Förderrichtung stromabwärts befindliches Ende (auch als Abgabeende bezeichnet) das zu trocknende Gut vom Obertrum durch die Bewegung des Obertrums in Förderrichtung auf eine nachgelagerte Einheit, wie beispielsweise ein Förderband einer Trocknungsvorrichtung, abgegeben werden kann.

Die Fördervorrichtung weist vorzugsweise einen oder mehrere Antriebe auf, welche eine Förderung des zu trocknenden Gutes in einer Förderrichtung ermöglichen. Wenn die Förderrichtung als Bandförderer mit einem Endlosförderband ausgebildet ist, kann dieser Antrieb beispielsweise ein Bandantrieb sein, der beispielsweise in Form einer Umlenkrolle an einem Ende des Endlosförderers angeordnet ist.

Die Steuereinheit steuert die Fördergeschwindigkeit der Fördervorrichtung, d. h. die Geschwindigkeit mit der zu trocknendes Gut in Förderrichtung bewegt wird. Über die Fördergeschwindigkeit der Fördervorrichtung kann somit indirekt auch die Menge an zu trocknendem Gut, das auf die nachgelagerte Einheit abgegeben wird, gesteuert werden.

Die Fördervorrichtung ist erfindungsgemäß um eine vertikale Schwenkachse schwenkbar angeordnet. Bevorzugt ist insbesondere, dass das Abgabeende der Fördervorrichtung, über das das zu trocknende Gut an die nachgelagerte Einheit abgegeben werden kann, schwenkbar ist um eine vertikale Schwenkachse, die vorzugsweise in einem Abschnitt der Fördervorrichtung angeordnet ist, der am oder nahe dem gegenüberliegenden Ende der Fördervorrichtung angeordnet ist. Die vertikale Schwenkachse ist vorzugsweise orthogonal zu einer Längsachse der Fördervorrichtung in Förderrichtung ausgerichtet und schneidet diese vorzugsweise. Insbesondere ist bevorzugt, dass die vertikale Schwenkachse in der Hälfte, insbesondere dem Drittel oder dem Viertel der Fördervorrichtung angeordnet ist, dass sich an einem Ende der Fördervorrichtung befindet, welches dem Abgabeende der Fördervorrichtung gegenüberliegt.

Die Fördervorrichtung ist um die vertikale Schwenkachse vorzugsweise in einem Kreisabschnitt von etwa 90 Grad schwenkbar, vorzugsweise insbesondere je etwa 45 Grad zu beiden Seiten ausgehend von einer Längsachse der Fördervorrichtung in Förderrichtung.

Insbesondere ist bevorzugt, dass eine Geschwindigkeit, insbesondere eine Winkelgeschwindigkeit, und/oder eine Pendelfrequenz der Fördervorrichtung bei deren Pendelbewegung um die Schwenkachse gesteuert wird. Eine möglichst gleichmäßige Verteilung des zu trocknendes Gutes auf einer der Dosiervorrichtung nachgelagerten Einheit wird insbesondere auch davon beeinflusst, mit welcher Frequenz und Geschwindigkeit die Fördervorrichtung ihre Pendelbewegung durchführt. Eine entsprechende Steuerung kann daher in vorteilhafter Weise zur Erzielung einer möglichst exakten und gleichmäßigen Dosierung eingesetzt werden.

In einer bevorzugten Ausführungsform ist vorgesehen, dass die Steuereinheit ausgebildet ist, die Pendelbewegung, vorzugsweise eine Geschwindigkeit, insbesondere eine Winkelgeschwindigkeit, und/oder eine Frequenz der Pendelbewegung, der Fördervorrichtung um die Schwenkachse in Abhängigkeit der Fördergeschwindigkeit zu steuern. Hierbei verknüpft die Steuerungseinheit vorzugsweise die Steuerung der Pendelbewegung der Fördervorrichtung mit der Steuerung der Fördergeschwindigkeit der Fördervorrichtung. Über eine solche Verknüpfung kann die Dosierung des von der Fördervorrichtung abgegebenen zu trocknenden Gutes weiter verbessert werden. Insbesondere ist bevorzugt, dass die Geschwindigkeit, insbesondere die Winkelgeschwindigkeit, der Pendelbewegung der Fördervorrichtung um die Schwenkachse auf Basis der Fördergeschwindigkeit, mit der die Fördervorrichtung zu trocknendes Gut fördert, gesteuert wird.

Alternativ oder zusätzlich kann vorgesehen sein, dass die Steuereinheit ausgebildet ist, die Pendelbewegung, vorzugsweise eine Geschwindigkeit, insbesondere eine Winkelgeschwindigkeit, und/oder eine Frequenz der Pendelbewegung, der Fördervorrichtung um die Schwenkachse in Abhängigkeit der Zufuhrgeschwindigkeit einer Zufuhreinrichtung zu steuern.

Ferner ist vorzugsweise vorgesehen, dass die Steuereinheit ausgebildet ist, die Geschwindigkeit, insbesondere die Winkelgeschwindigkeit, der Pendelbewegung der Fördervorrichtung um die Schwenkachse entlang einer Bewegungsbahn der Fördervorrichtung zu verändern. Wenn die Geschwindigkeit, insbesondere die Winkelgeschwindigkeit, der Pendelbewegung der Fördervorrichtung entlang der ihrer Bewegungsbahn nicht konstant ist, sondern variiert, kann dies genutzt werden, um eine besonders gleichmäßige Verteilung des zu trocknenden Gutes auf einer der Dosiervorrichtung nachgelagerten Einheit zu erreichen. Die Steuereinheit ist daher vorzugsweise ausgebildet, die Geschwindigkeit, insbesondere die Winkelgeschwindigkeit, der Pendelbewegung der Fördervorrichtung um die Schwenkachse je nach Position der Fördervorrichtung entlang der Bewegungsbahn zu erhöhen, beizubehalten oder zu reduzieren.

Gemäß einem weiteren Aspekt der Erfindung wird die eingangs genannte Aufgabe gelöst durch eine Dosiervorrichtung gemäß dem Oberbegriff von Anspruch 1 oder einer der zuvor beschriebenen Dosiervorrichtungen, bei der die Steuereinheit ausgebildet ist, die Fördergeschwindigkeit der Fördervorrichtung in Abhängigkeit der Pendelbewegung, vorzugsweise der Geschwindigkeit, insbesondere der Winkelgeschwindigkeit, und/oder der Frequenz der Pendelbewegung, der Fördervorrichtung um die Schwenkachse zu steuern und/oder die Fördergeschwindigkeit der Fördervorrichtung entlang einer Bewegungsbahn der Fördervorrichtung zu verändern.

Dieser Aspekt beruht unter anderem auf der Erkenntnis, dass auch durch eine bestimmte Steuerung der Fördergeschwindigkeit der Fördervorrichtung eine besonders gleichmäßige Verteilung des zu trocknenden Gutes auf einer der Dosiervorrichtung nachgelagerten Einheit, wie beispielsweise einer Trocknungsvorrichtung, erzielt werden kann. Diese bestimmte Steuerung kann darin bestehen, die Fördergeschwindigkeit der Fördervorrichtung in Abhängigkeit der Pendelbewegung zu steuern, insbesondere in Abhängigkeit der Geschwindigkeit, insbesondere der Winkelgeschwindigkeit, und/oder der Frequenz der Pendelbewegung, der Fördervorrichtung um die Schwenkachse. Die bestimmte Steuerung kann aber auch darin bestehen, die Fördergeschwindigkeit der Fördervorrichtung entlang ihrer Bewegungsbahn nicht konstant ist, sondern variiert, kann dies genutzt werden, um eine besonders gleichmäßige Verteilung des zu trocknenden Gutes auf einer der Dosiervorrichtung nachgelagerten Einheit zu erreichen. Die Steuereinheit ist daher vorzugsweise ausgebildet, die Fördergeschwindigkeit der Fördervorrichtung je nach Position der Fördervorrichtung entlang der Bewegungsbahn zu erhöhen, beizubehalten oder zu reduzieren.

Besonders bevorzugt ist es, dass die Steuereinheit ausgebildet ist, die Winkelgeschwindigkeit der Pendelbewegung der Fördervorrichtung so zu steuern, dass die Winkelgeschwindigkeit der Pendelbewegung der Fördervorrichtung im Bereich der Umkehrpunkte einer Bewegungsbahn der Pendelbewegung größer ist, vorzugsweise um ein Vielfaches größer ist, als zwischen den Umkehrpunkten, insbesondere an einem Punkt auf halbem Wege der Bewegungsbahn zwischen den Umkehrpunkten.

Die Umkehrpunkte sind vorzugsweise die Endpunkte der Bewegungsbahn der Pendelbewegung, d. h. die Punkte, in denen nach Durchlaufen eines Kreisbogenabschnitts die Fördervorrichtung die Bewegungsrichtung ändert, also kurz zum Stillstand kommt, um anschließend den Kreisbogenabschnitt der Bewegungsbahn in umgekehrter Richtung wieder zu durchlaufen. Die Bewegungsbahn ist vorzugsweise so angeordnet, dass der Punkt auf halbem Wege der Punkt auf der in Förderrichtung verlaufende Längsachse ist. Da im Umkehrpunkt der Pendelbewegung ein Richtungswechsel der Bewegung der Fördervorrichtung stattfindet, muss die Geschwindigkeit der Fördervorrichtung im Umkehrpunkt selbst, d. h. beim Wechsel der Bewegungsrichtung, kurzzeitig auf Null gehen. Eine höhere Geschwindigkeit im Bereich der Umkehrpunkte ist somit so zu verstehen, dass die Geschwindigkeit der Fördervorrichtung entlang der Bewegungsbahn in der Nähe der Umkehrpunkte, also kurz vor bzw. nach den Umkehrpunkten, erhöht ist. Unter einem solchen Bereich der Umkehrpunkte wird insbesondere ein Bereich von etwa 10%, etwa 15%, etwa 20%, etwa 25%, oder etwa 30% der gesamten Bewegungsbahn zwischen den Umkehrpunkten verstanden, wobei sich dieser Bereich von etwa 10%, etwa 15%, etwa 20%, etwa 25%, oder etwa 30% an den Enden der Bewegungsbahn angrenzend an die Umkehrpunkte anschließt.

Das Abbremsen der Fördervorrichtung und/oder die Umkehr der Pendel-Bewegungsrichtung kann beispielsweise durch einen mechanischen Anschlag an den Umkehrpunkten erfolgen. Dazu kann die Dosiervorrichtung beispielsweise im Bereich des Abgabeendes seitlich jeweils einen Sensor, wie beispielsweise einen Rollentaster oder Rollenhebel, aufweisen, der das Erreichen des Umkehrpunktes detektiert und vorzugsweise ausgebildet ist, daraufhin die Antriebsrichtung eines Antriebs der Fördervorrichtung zur Erzielung der Pendelbewegung zu ändern, beispielsweise über eine Wende-Schützschaltung. Nach Erreichen des Anschlags und der Umkehr der Pendel-Bewegungsrichtung wird die Fördervorrichtung in ihrer Pendelbewegung wieder auf die Soll-Geschwindigkeit beschleunigt. Beim Antrieb der Fördervorrichtung zur Erzielung der Pendelbewegung mittels eines Elektromotors kann die für die Beschleunigung auf Soll-Geschwindigkeit erforderliche Zeit abhängig sein von der Rampe des Frequenzumrichters und beträgt vorzugsweise maximal 1 Sekunde, insbesondere maximal 0,5 Sekunden.

Eine erhöhte bzw. Soll (Winkel-)Geschwindigkeit im Bereich der Umkehrpunkte wird hier insbesondere als die (Winkel-)Geschwindigkeit verstanden, die Fördervorrichtung bei ihrer Pendelbewegung kurz vor dem Abbremsen und/oder nach der (Wieder-)Beschleunigung nach dem Richtungswechsel im Umkehrpunkt hat.

Durch diese Erhöhung der Geschwindigkeit, insbesondere der Winkelgeschwindigkeit, im Bereich der Umkehrpunkte wird verhindert, dass sich an den Seiten einer nachgelagerten Einheit, insbesondere eines nachgelagerten Förderbandes, mehr zu trocknendes Gut sammelt als zwischen diesen Seiten. Durch eine Verlangsamung der Winkelgeschwindigkeit kann in dem Bereich der Bewegungsbahn mit verringerter Geschwindigkeit mehr zu trocknendes Gut von der Fördervorrichtung abgegeben werden, so dass im Bereich zwischen den beiden Randbereichen eines nachgelagerten Förderbandes vorzugsweise die gleiche Menge zu trocknendes Gut abgegeben wird wie in den Randbereichen.

Eine besonders bevorzugte Ausbildung der Dosiervorrichtung ergibt sich ferner dadurch, dass die Steuereinheit ausgebildet ist, die Geschwindigkeit, insbesondere die Winkelgeschwindigkeit, der Pendelbewegung der Fördervorrichtung in Abhängigkeit von für bestimmte Punkte der Bewegungsbahn vorgegebenen Geschwindigkeiten, insbesondere Winkelgeschwindigkeiten, für die übrige Bewegungsbahn, insbesondere durch Interpolation, zu ermitteln.

Die bevorzugten Geschwindigkeiten, insbesondere Winkelgeschwindigkeiten, der Pendelbewegung der Fördervorrichtung in bestimmten Punkten der Bewegungsbahn bzw. in bestimmten Bereichen der Bewegungsbahn, wie beispielsweise im Bereich der Umkehrpunkte und/oder an einem Punkt auf halbem Wege der Bewegungsbahn zwischen den Umkehrpunkten, lässt sich insbesondere gut empirisch durch Versuche bestimmen. Diese durch Versuche ermittelten Geschwindigkeiten können in der Steuereinheit vorzugsweise als vorgegebene Geschwindigkeiten in diesen Bereichen bzw. Punkten der Bewegungsbahn hinterlegt werden. Beispielsweise können für verschiedene zu trocknende Güter oder zu trocknende Güter mit verschiedenen Eigenschaften auch verschiedene solcher, vorzugsweise empirisch ermittelter, vorgebebener Geschwindigkeiten hinterlegt werden. Die Steuereinheit ist dann vorzugsweise ausgebildet, auf Basis dieser vorgegebenen Geschwindigkeiten die Geschwindigkeit auch für die übrigen Abschnitte der Bewegungsbahn, somit vorzugsweise die Geschwindigkeiten bzw. den Geschwindigkeitsverlauf über die gesamte Bewegungsbahn zu ermitteln, wobei vorzugsweise das Verfahren der Interpolation eingesetzt wird. Ferner vorzugsweise steuert dann die Steuereinheit die Pendelbewegung der Fördervorrichtung nach den vorgegebenen und den ermittelten Geschwindigkeiten bzw. dem ermittelten Geschwindigkeitsverlauf über die gesamte Bewegungsbahn.

In einer weiteren Ausgestaltung der Dosiervorrichtung ist vorgesehen, dass die Dosiervorrichtung eine Wiegevorrichtung umfasst, die angeordnet und ausgebildet ist, das Gewicht des auf der Fördervorrichtung befindlichen zu trocknenden Gutes zu ermitteln. Die Ermittlung des Gewichts des auf der Fördervorrichtung befindlichen zu trocknenden Gutes ist ein wichtiger Parameter, um die Dosierung exakt steuern zu können.

Ferner ist bevorzugt, dass die Fördervorrichtung eine Mehrzahl von Wiegezellen aufweist. Insbesondere ist es bevorzugt, dass die Fördervorrichtung vier Wiegezellen aufweist, wobei vorzugsweise jeweils zwei Wiegezellen quer zur Förderrichtung beabstandet an einem ersten und an einem zweiten Ende der Fördervorrichtung angeordnet sind. Eine Anordnung einer Mehrzahl von Wiegezellen, insbesondere von vier Wiegezellen in der zuvor beschriebenen Anordnung, ist bevorzugt, um das Gewicht des auf der Fördervorrichtung befindlichen zu trocknenden Gutes möglichst genau ermitteln zu können. Die Lagerung der Fördervorrichtung auf vier Wiegezellen, die vorzugsweise im Bereich der vier Ecken der Fördervorrichtung angeordnet sind, hat den Vorteil, das Gewicht des auf der Fördervorrichtung befindlichen Gutes unabhängig von dessen Verteilung über die Länge der Fördervorrichtung ermitteln zu können. So kann beispielsweise der Einfluss einer Verlagerung des Schwerpunkts des Gutes auf der Fördervorrichtung oder der Einfluss einer ungleichmäßigen Zuführung durch eine Zuführvorrichtung auf die Gewichtsermittlung reduziert oder sogar eliminiert werden. Beispielsweise kann durch eine zeitlich ungleichmäßige Zufuhr von zu trocknendem Gut auf die Fördervorrichtung eine ungleichmäßige Verteilung des zu trocknenden Gutes auf der Fördervorrichtung entstehen, wobei sich der Schwerpunkt des auf der Fördervorrichtung befindlichen Gutes zu dem noch durch die Förderung des Gutes entlang der Fördervorrichtung verändert. Die Wiegevorrichtung, insbesondere die Mehrzahl von Wiegezellen, ist daher vorzugsweise so angeordnet, dass der Einfluss der Position des Gutes auf der Fördervorrichtung auf das Wiegeergebnis minimiert wird.

Weiterhin ist vorzugsweise vorgesehen, dass die Steuereinheit ausgebildet ist, die Fördergeschwindigkeit und/oder die Pendelbewegung, vorzugsweise eine Geschwindigkeit, insbesondere eine Winkelgeschwindigkeit, und/oder eine Frequenz der Pendelbewegung, der Fördervorrichtung um die Schwenkachse in Abhängigkeit der Menge und/oder des Gewichts des auf der Fördervorrichtung befindlichen zu trocknenden Gutes und/oder in Abhängigkeit der pro Zeiteinheit von einer Zufuhreinrichtung zugeführten Menge und/oder des pro Zeiteinheit von einer Zufuhreinrichtung zugeführten Gewichts zu steuern. Auch eine Steuerung in Abhängigkeit von einer Zufuhrgeschwindigkeit, beispielsweise einer Fördergeschwindigkeit eines Zufuhrförderbandes kann bevorzugt sein.

Besonders bevorzugt ist ferner, dass die Steuereinheit ausgebildet ist, in Abhängigkeit des Gewichts des auf der Fördervorrichtung befindlichen zu trocknenden Gutes vorgegebene Geschwindigkeiten mit einem gewichtsabhängigen Offset zu versehen und diesen Offset bei der Ermittlung der Geschwindigkeit, insbesondere die Winkelgeschwindigkeit, der Pendelbewegung der Fördervorrichtung für die übrige Bewegungsbahn, zu berücksichtigen. Auf diese Weise können gewichtsabhängige Veränderungen der Pendelbewegung der Fördervorrichtung vorgenommen werden, die auch bei unterschiedlicher und/oder ungleichmäßiger Beladung der Fördervorrichtung mit zu trocknendem Gut für eine möglichst gleichmäßige Dosierung bzw. Abgabe des Gutes zu gewährleisten.

Ferner ist eine Ausgestaltung bevorzugt, bei der die Steuereinheit angeordnet und ausgebildet ist, ein Signal oder mehrere Signale, vorzugsweise mit Informationen zu einer oder mehrerer nachgelagerten Einheiten, wie beispielsweise zu deren Fördergeschwindigkeit(en), zu empfangen und die Fördergeschwindigkeit und/oder die Pendelbewegung, vorzugsweise eine Geschwindigkeit, insbesondere eine Winkelgeschwindigkeit, und/oder eine Frequenz der Pendelbewegung, der Fördervorrichtung um die Schwenkachse in Abhängigkeit des empfangenen Signals bzw. der empfangenen Signale zu steuern.

In dieser Ausgestaltung ist vorgesehen, dass die Steuereinheit die Steuerung der Fördergeschwindigkeit und/oder der Pendelbewegung auch in Abhängigkeit einer oder mehrerer nachgelagerter Einheiten steuern kann. In Trocknungsvorrichtungen zur Trocknung von Gut, wie beispielsweise Gärsubstrat oder Kot, ist die Abstimmung der Fördergeschwindigkeiten verschiedener Trocknungsvorrichtungen bzw. Trocknungsbänder mit der Menge und Geschwindigkeit, mit der zu trocknendes Gut in die Trocknungsvorrichtung gegeben wird, entscheidend für ein gutes Trocknungsergebnis. Daher ist es von Vorteil, wenn die Dosiervorrichtung auch Informationen, insbesondere zu Prozessparametern, wie beispielsweise der Fördergeschwindigkeit von Förderbändern, von nachgelagerten Einheiten berücksichtigt, um die Dosiervorrichtung so ansteuern zu können, dass eine auf die nachgelagerten Einheiten abgestimmte Menge an Gut von der Fördervorrichtung abgegeben werden kann.

Ferner ist bevorzugt, dass die Steuereinheit angeordnet und ausgebildet ist, ein Signal oder mehrere Signale, vorzugsweise mit Informationen zum über die Dosiervorrichtung abzugebenden Gut, wie beispielsweise dessen Menge, Gewicht, die Fördergeschwindigkeit, mit der das Gut abgegeben wird, oder sonstige Eigenschaften des Gutes, zu erzeugen und vorzugsweise zu einer oder mehreren nachgelagerten Einheiten zu übermitteln kannAuf diese Weise ermöglicht es die Dosiervorrichtung auch, dass Steuereinheiten nachgelagerter Einheiten diese nachgelagerten Einheiten in Abhängigkeit eines oder mehrerer von der Steuereinheit der Dosiervorrichtung empfangener Signale zu steuern und beispielsweise die Fördergeschwindigkeiten von Trocknungsbändern von Trocknungsvorrichtungen, die der Dosiervorrichtung nachgelagert sind, auf die Art, Menge und Geschwindigkeit des von der Dosiervorrichtung abgegebenen Gutes anpassen können.

In einer weiteren Ausgestaltung der Dosiervorrichtung ist bevorzugt, dass die Dosiervorrichtung zwei Seitenwände aufweist, die sich im wesentlichen parallel zur Förderrichtung erstrecken und vorzugsweise zumindest abschnittsweise im wesentlichen vertikal ausgerichtet sind oder um weniger als 30 Grad, insbesondere weniger als 10 Grad, zur Vertikalen geneigt sind.

Das Vorsehen von zwei Seitenwänden hat den Vorteil, dass auf der Fördervorrichtung der Dosiervorrichtung befindliches Gut von den Seitenwänden gehalten werden kann und damit verhindert wird, dass das Gut in unkontrollierter Weise seitlich von der Fördervorrichtung abgegeben wird und nur an der dafür vorgesehenen Stelle, vorzugsweise dem Abgabeende, der Fördervorrichtung von dieser abgegeben wird.

Die Ausbildung der beiden Seitenwände zumindest abschnittsweise im Wesentlichen vertikal oder um weniger als 30 Grad, insbesondere um weniger als 10 Grad, zur Vertikalen geneigt, hat den Vorteil, dass eine genauere Gewichtsermittlung ermöglicht wird.

Ferner ist vorzugsweise vorgesehen, dass sich die zwei sich im wesentlichen parallel zur Förderrichtung erstreckenden Seitenwände in Förderrichtung um jeweils weniger als 5 Grad, insbesondere um jeweils 1 Grad, öffnen. Das auf der Fördervorrichtung befindliche zu trocknende Gut wird vorzugsweise an dem in Förderrichtung stromabwärts befindlichen Abgabeende der Fördervorrichtung abgegeben. Daher ist es vorteilhaft, wenn sich die beiden Seitenwände in Richtung der Förderrichtung, also zum Abgabeende der Fördervorrichtung hin, leicht öffnen. Auf diese Weise kann eine Stauung von zu trocknendem Gut am in Förderrichtung Abgabeende der Fördervorrichtung verhindert oder zumindest reduziert werden.

Ferner ist bevorzugt, dass die Dosiervorrichtung eine im Wesentlichen quer zur Förderrichtung angeordnete Stellklappe aufweist, die vorzugsweise an den zwei Seitenwänden befestigt ist. Die Stellklappe ist ferner vorzugsweise im Bereich des in Förderrichtung stromabwärts gelegenen Endes der Fördervorrichtung angeordnet, d. h. im Bereich des Abgabeendes der Fördervorrichtung. Die Stellklappe ist vorzugsweise lösbar und/oder beweglich an den Seitenwänden befestigt.

Ferner ist bevorzugt, dass die Stellklappe um eine horizontale Stellachse schwenkbar ist und vorzugsweise in verschiedenen Schwenkpositionen fixierbar ist. Die Fixierung der Stellklappe in einer oder mehreren verschiedenen Schwenkpositionen kann beispielsweise über eine Rastverbindung, einen Bolzen oder ähnliche Mittel hergestellt werden.

Vorzugsweise ist ferner vorgesehen, dass die Stellachse derart angeordnet ist, dass ein unteres Ende der Stellklappe um die Stellachse schwenkbar ist, so dass die Stellachse eine oder mehrere Schwenkpositionen einnehmen kann, in der die Stellklappe von einem oberen Ende zu einem unteren Ende in Richtung der Förderrichtung geneigt ist. Die Neigung der Stellklappe von einem oberen Ende zu einem unteren Ende in Richtung der Förderrichtung beträgt vorzugsweise etwa 30 bis 60 Grad zur Horizontalen, beispielsweise etwa 45 Grad zur Horizontalen.

Bevorzugt ist ferner, dass die Stellklappe derart ausgebildet und angeordnet ist, dass ein Mindestabstand zwischen der Stellklappe und der Fördervorrichtung nicht unterschritten und/oder ein Maximalabstand zwischen der Stellklappe und der Fördervorrichtung nicht überschritten wird.

Die Stellklappe und ihre möglichen Ausführungsformen haben den Vorteil, dass bei der Abgabe des zu trocknenden Gutes von der Dosiervorrichtung zum Einen ein gewisser Druck auf das Gut bei bzw. vor der Abgabe ausgeübt werden kann. Insbesondere die geneigte Ausbildung der Stellklappe hat den Vorteil, dass dadurch gleichzeitig ein Aufbauen bzw. Stauen des zu trocknenden Guts hinter der Stellklappe verhindert bzw. reduziert wird und ein kontinuierlicher Gutfluss gefördert wird.

Gemäß einem weiteren Aspekt der Erfindung wird die Eingangs genannte Aufgabe gelöst durch ein Verfahren zum Dosieren eines Gutes, insbesondere eines zu trocknenden Gutes wie ein Gärsubstrat oder Kot, umfassend Fördern von auf eine Fördervorrichtung zugeführtem zu trocknendem Gut in einer Förderrichtung, Steuern einer Fördergeschwindigkeit der Fördervorrichtung, und Steuern einer Pendelbewegung, vorzugsweise einer Geschwindigkeit, insbesondere einer Winkelgeschwindigkeit, und/oder einer Pendelfrequenz der Pendelbewegung, der Fördervorrichtung um eine vertikale Schwenkachse der Fördervorrichtung, Steuern einer Geschwindigkeit der Pendelbewegung der Fördervorrichtung, so dass die Geschwindigkeit der Pendelbewegung der Fördervorrichtung im Bereich der Umkehrpunkte einer Bewegungsbahn der Pendelbewegung größer ist als zwischen den Umkehrpunkten.

Das erfindungsgemäße Verfahren und seine möglichen Fortbildungen weisen Merkmale bzw. Verfahrensschritte auf, die sie insbesondere dafür geeignet machen, für eine erfindungsgemäße Dosiervorrichtung und ihre Fortbildungen verwendet zu werden.

Zu den Vorteilen, Ausführungsvarianten und Ausführungsdetails des erfindungsgemäßen Verfahrens und seiner möglichen Fortbildungen wird auf die vorangegangene Beschreibung zu den entsprechenden Vorrichtungsmerkmalen verwiesen.

Bevorzugte Ausführungsformen der Erfindung werden beispielhaft anhand der beiliegenden Figuren beschrieben. Es zeigen:
- Figur 1:: Eine Seitenansicht einer beispielhaften Ausführungsform einer erfindungsgemäßen Dosiervorrichtung (gegenüber den übrigen Darstellungen um 180 Grad gedreht);
- Figur 2:: eine Draufsicht auf die Dosiervorrichtung gemäß Figur 1;
- Figur 3:: Kennlinien für die Winkelgeschwindigkeit für verschiedene Pendelfrequenzen der Dosiervorrichtung gemäß Figur 1;
- Figur 4:: eine dreidimensionale Darstellung eines vergrößerten Ausschnitts der Dosiervorrichtung gemäß Figur 1;
- Figur 5:: einen Längsschnitt durch die Dosiervorrichtung gemäß Figur 1 in einem ersten Stadium;
- Figur 6:: einen Längsschnitt durch die Dosiervorrichtung gemäß Figur 1 in einem zweiten Stadium;
- Figur 7:: einen Längsschnitt durch die Dosiervorrichtung gemäß Figur 1 in einem dritten Stadium;
- Figur 8a:: einen Querschnitt durch einen Teil einer Dosiervorrichtung mit einer ersten Ausgestaltung von Seitenwänden;
- Figur 8b:: einen Querschnitt durch einen Teil einer Dosiervorrichtung mit einer zweiten Ausgestaltung von Seitenwänden;
- Figur 9:: eine weitere Draufsicht auf einen Teil einer Dosiervorrichtung gemäß Figur 1; und
- Figur 10:: einen Längsschnitt durch die Dosiervorrichtung gemäß Figur 1 mit schematisierter Darstellung des Gutflusses.

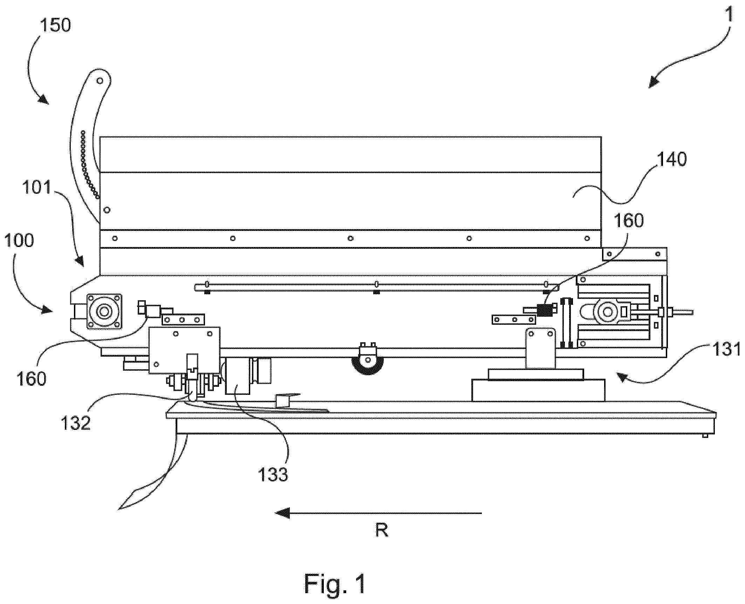

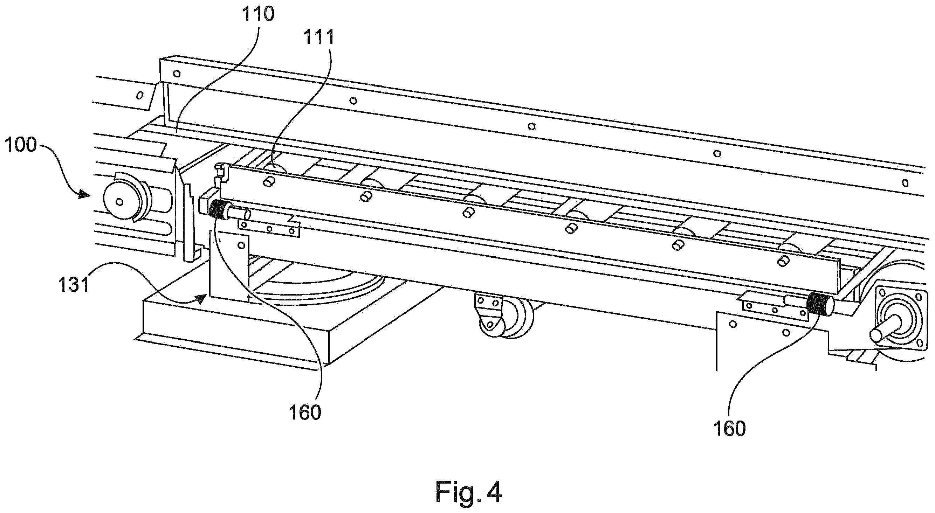

Die in den Figuren 1 bis 10 dargestellte Dosiervorrichtung und ihre Eigenschaften zeigen eine beispielhafte Ausgestaltung einer möglichen erfindungsgemäßen Dosiervorrichtung. Die Seitenansicht in Figur 1 ist gegenüber den übrigen Zeichnungen um 180 Grad verdreht dargestellt. Gleiche oder im Wesentlichen funktionsgleiche Elemente sind in den Zeichnungen mit den gleichen Bezugszeichen versehen.

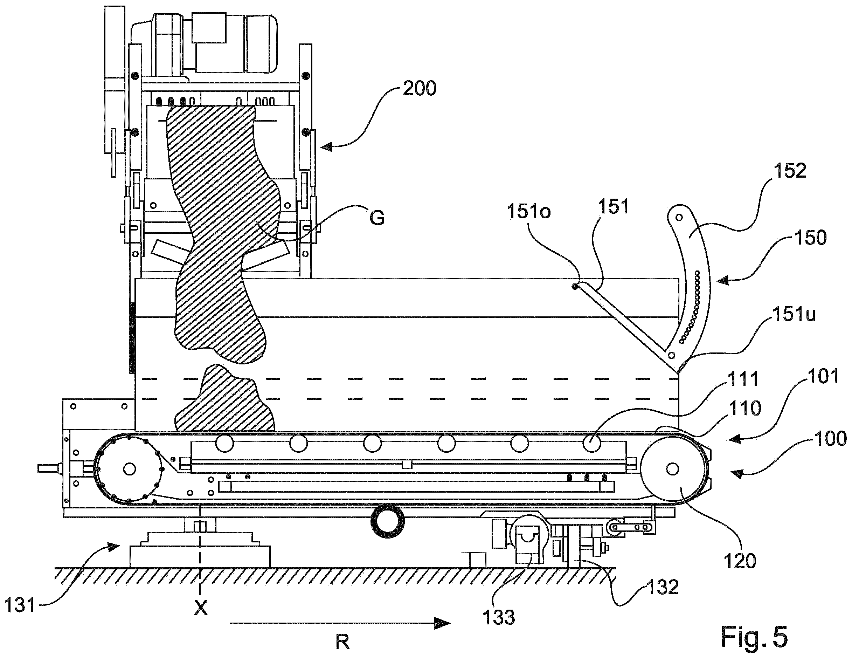

Die dargestellte beispielhafte Dosiervorrichtung 1 zum Dosieren eines Gutes G, insbesondere eines zu trocknenden Gutes wie ein Gärsubstrat oder Kot, weist eine Fördervorrichtung 100 auf, mit der das zu trocknende Gut G in einer Förderrichtung R gefördert werden kann. Wie insbesondere in den Figuren 5 bis 7 und 10 zu erkennen ist, kann das zu trocknende Gut G der Dosiervorrichtung 1, insbesondere der Fördervorrichtung 100, über eine Zufuhreinrichtung 200 zugeführt werden. Über ein in Förderrichtung R stromabwärts gelegenes Ende 101 der Fördervorrichtung 100, das auch als Abgabeende bezeichnet werden kann, wird das Gut von der Dosiervorrichtung 1 bzw. der Fördervorrichtung 100 abgegeben, beispielsweise an eine nachgelagerte Einheit, die zum Beispiels als Trocknungsvorrichtung ausgebildet sein kann.

Die Fördervorrichtung 100 ist als Bandförderer mit einem Endlosband ausgebildet, das über mehrere Rollen 111 gelagert und über zwei Umlenkrollen 120 umgelenkt wird , wobei vorzugsweise mindestens eine der Umlenkrollen 120 als angetriebene Rolle oder Bandantrieb ausgebildet ist, um das Obertrum 110, auf dem das Gut befördert wird, in Förderrichtung R anzutreiben. Der Antrieb erfolgt vorzugsweise über einen Elektromotor. Die Fördergeschwindigkeit der Fördervorrichtung 100 ist durch eine Steuereinheit (nicht dargestellt) steuerbar, insbesondere indem die Antriebsgeschwindigkeit des Bandantriebs verändert wird.

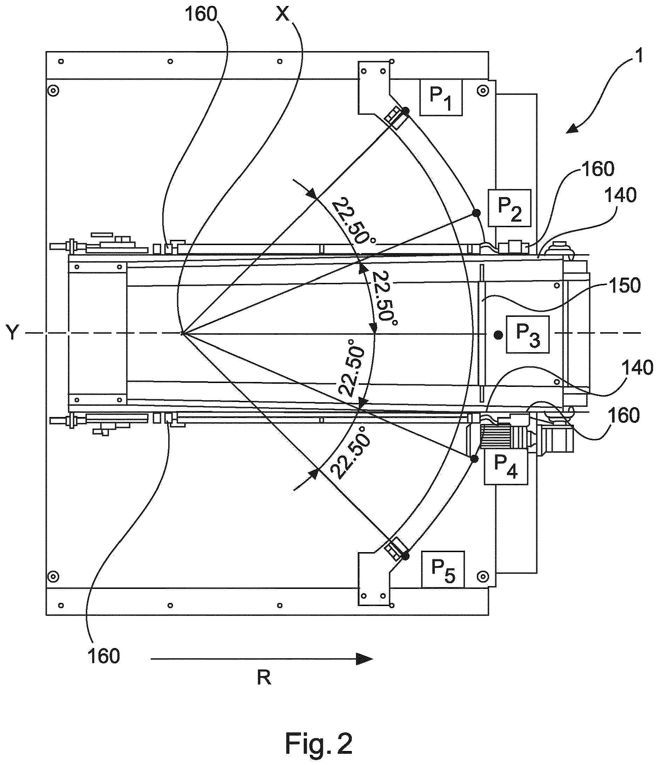

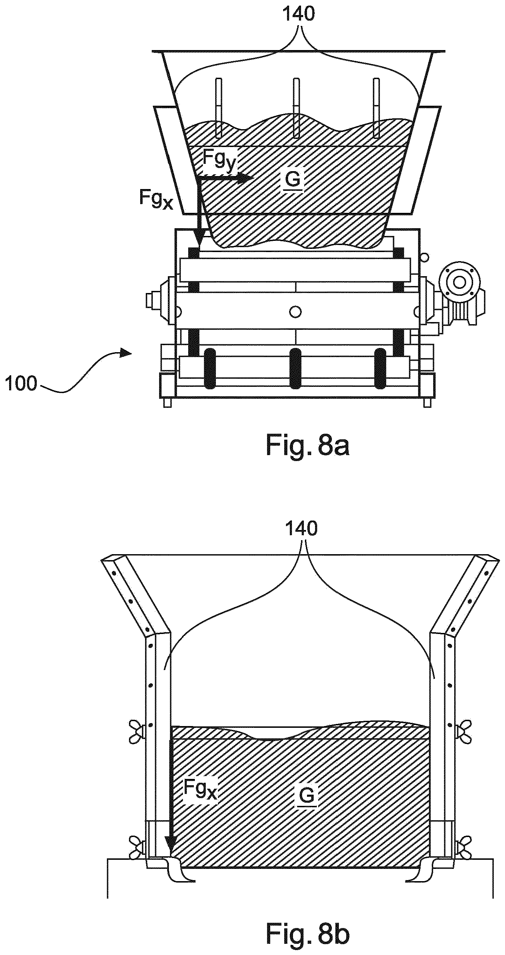

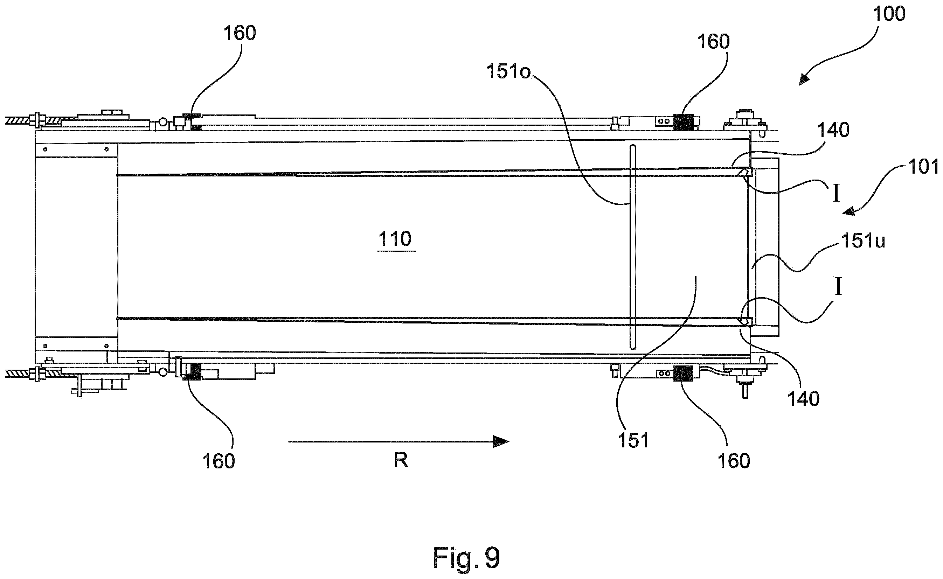

Die Dosiervorrichtung 1 weist zwei Seitenwände 140 auf, die sich im Wesentlichen parallel zur Förderrichtung R erstrecken. Wie insbesondere in den Figuren 2 und 8 zu erkennen ist, öffnen sich die beiden sich im Wesentlichen parallel zur Förderrichtung R erstreckenden Seitenwände 140 in Förderrichtung R leicht, in den in Figur 2 und 9 gezeigten Beispielen um jeweils 1 Grad. In Figur 9 ist mit I beispielhaft der Verlauf eingezeichnet, den die Seitenwände 140 hätten, würden sie sich nicht in Förderrichtung R hin leicht öffnen. Diese leichte Öffnung der Seitenwände 140 hat den Vorteil, dass ein Aufbauen bzw. Stauen des zu fördernden Gutes G zum Abgabeende 101 hin verringert oder sogar vermieden werden kann.

In den Figuren 8a und 8b sind im Querschnitt zwei unterschiedliche Gestaltungen von Seitenwänden 140', 140 dargestellt. In Figur 8a sind die Seitenwände 140' schräg zur Vertikalen geneigt, wohingegen in Figur 8b die Seitenwände 140 zumindest abschnittsweise, nämlich im unteren Abschnitt, vertikal ausgerichtet sind. Die in Figur 8b gezeigte Variante hat den Vorteil, dass eine Gewichtsermittlung des sich auf der Förderrichtung 100 zwischen den Seitenwänden 140 befindliche Gut G verbessert wird.

Zur Ermittlung des Gewichts des auf der Förderrichtung 100 befindlichen zu trocknenden Gutes G weist die Dosiervorrichtung 1 eine Wiegevorrichtung in Form von vier Wiegezellen 160 auf. Jeweils zwei Wiegezellen 160 sind quer zur Förderrichtung R beabstandet am Abgabeende 101 der Fördervorrichtung 100 angeordnet und zwei weitere Wiegezellen 160 sind ebenfalls quer zur Förderrichtung R beabstandet an einem dem Abgabeende 101 gegenüberliegenden Ende der Fördervorrichtung 100 angeordnet.

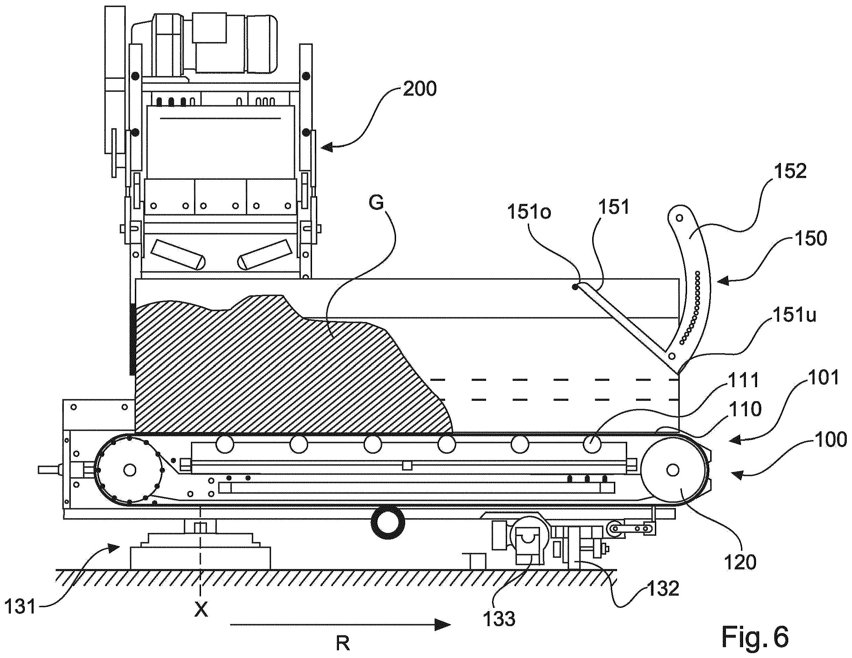

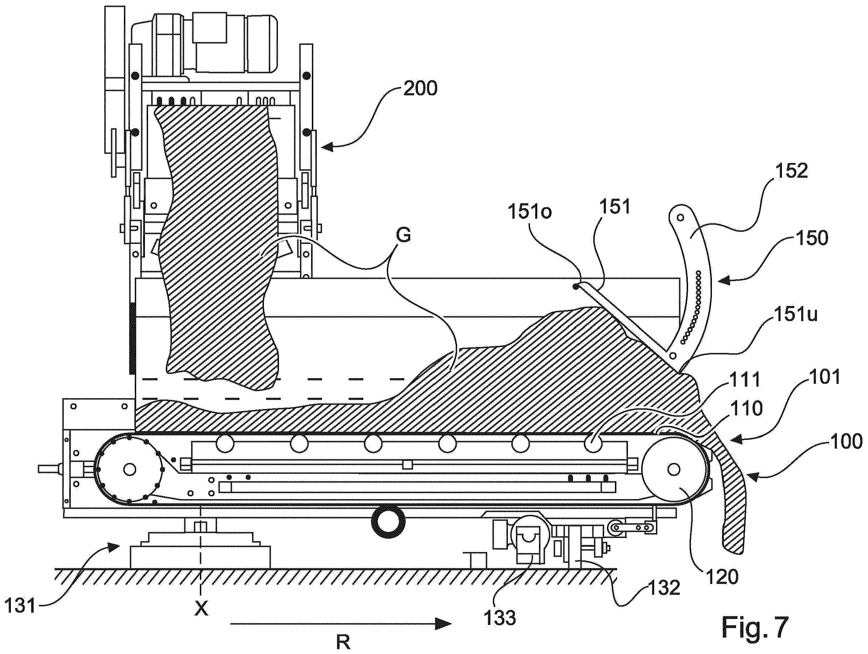

Diese Anordnung von mehreren Wiegezellen 160 hat den Vorteil, dass das Gewicht des auf der Fördervorrichtung 100 befindlichen zu trocknenden Gutes G zuverlässig ermittelt werden kann, auch wenn eine ungleichmäßige und/oder sich verändernde Verteilung des Gutes G auf der Fördervorrichtung 100 gegeben ist, wie beispielsweise in den Figuren 5 bis 7 gezeigt: In Figur 5 wird Gut G über die Zufuhreinrichtung 200 auf das Obertrum 110 der Fördervorrichtung 100 zugeführt, welches sich dann in Figur 6 auf einem im Wesentlichen in Förderrichtung R stromaufwärts befindlichen Abschnitt des Obertrums 110 der Fördervorrichtung 100 befindet und, wie in Figur 7 dargestellt, in Förderrichtung R weitergefördert wird auf einen in Förderrichtung R stromabwärts befindlichen Abschnitt des Obertrums 110 der Fördervorrichtung 100. Eine erneute Zufuhr von Gut G über die Zufuhreinrichtung 200 wird den Schwerpunkt des Guts G auf der Fördervorrichtung 100 erneut verändern. Das Vorsehen von mehreren Wiegezellen hat den Vorteil, dass das Gewicht des Gutes G auf dem Obertrum 110 der Fördervorrichtung 100 sicher und zuverlässig ermittelt werden kann, unabhängig von der Verteilung des Gutes G auf dem Obertrum 110 der Fördervorrichtung 100.

Die Fördervorrichtung 100 ist um eine vertikale Schwenkachse X schwenkbar angeordnet. Die vertikale Schwenkachse X ist orthogonal zu der Längsachse Y der Fördervorrichtung 100 ausgerichtet und schneidet diese. Ferner ist die vertikale Schwenkachse X in einem Bereich der Fördervorrichtung 100 angeordnet, der etwa einem Viertel der Erstreckung der Fördervorrichtung 100 in Förderrichtung R ausgehend von einem dem Abgabeende 101 gegenüberliegenden Ende entspricht. Auf diese Weise ermöglicht die Pendelbewegung der Fördervorrichtung 100 insbesondere eine Pendelbewegung des Abgabeendes 101 der Fördervorrichtung 100 entlang einer Bewegungsbahn, die - wie insbesondere in Figur 2 zu erkennen ist - einem Kreisbogenabschnitt von 90 Grad entspricht.

Die schwenkbare Lagerung um die Schwenkachse X ist über eine entsprechende Lagerungsvorrichtung 131 realisiert. Die Pendelbewegung des Abgabeendes 101 wird unterstützt durch eine Rolle 132, die vorzugsweise durch einen Elektromotor 133 angetrieben ist.

Die Steuereinheit ist angeordnet und ausgebildet, die Pendelbewegung der Fördervorrichtung 100 zu steuern, wobei beispielsweise der Antrieb 133 zum Antreiben des Rades 132 zur Steuerung genutzt werden kann. Die Steuereinheit ist vorzugsweise insbesondere ausgebildet, die Geschwindigkeit, insbesondere die Winkelgeschwindigkeit, und/oder die Pendelfrequenz der Pendelbewegung der Fördervorrichtung 100 um die Schwenkachse X zu verändern, beispielsweise in Abhängigkeit der Fördergeschwindigkeit der Fördervorrichtung 100, in Abhängigkeit von Informationen, wie beispielsweise Fördergeschwindigkeiten, einer oder mehrerer nachgelagerter Einheiten, wie beispielsweise Trocknungsvorrichtungen und/oder in Abhängigkeit des Gewichts des auf der Fördervorrichtung 100 befindlichen Gutes G. Auch die Frequenz der Pendelbewegung kann durch die Steuereinheit gesteuert werden.

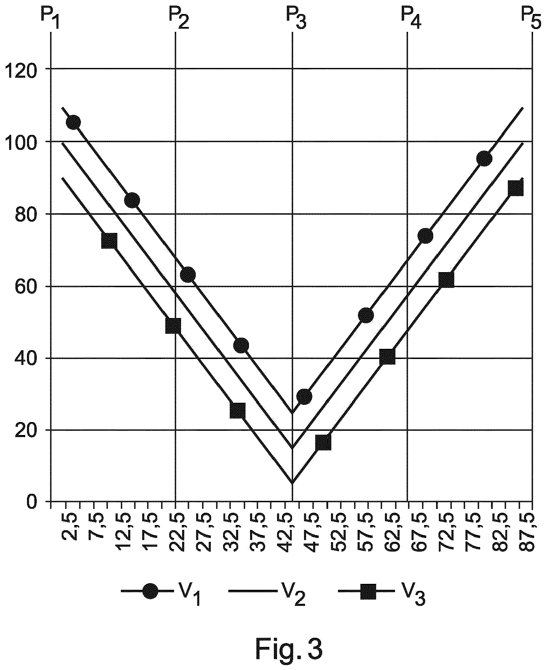

Die Steuereinheit ist dabei insbesondere so ausgebildet, dass die Geschwindigkeit, insbesondere die Winkelgeschwindigkeit, der Pendelbewegungen der Fördervorrichtung 100 so gesteuert wird, dass die Geschwindigkeit, insbesondere die Winkelgeschwindigkeit, der Pendelbewegung der Fördervorrichtung 100 im Bereich der Umkehrpunkte P₁ und P₅ größer ist, insbesondere um ein Vielfaches größer ist, als zwischen den Umkehrpunkten P₁ und P₅, insbesondere an einem Punkt P₃ auf halben Wege der Bewegungsbahn zwischen den Umkehrpunkten P₁ und P₅, wie insbesondere in den Figuren 2 und 3 zu erkennen ist. Vorzugsweise werden für bestimmte Punkte der Bewegungsbahn, wie beispielsweise die in den Figuren 2 und 3 dargestellten Punkte P₁-P₅, bevorzugte Geschwindigkeiten, insbesondere Winkelgeschwindigkeiten, empirisch ermittelt und in der Steuereinheit hinterlegt. Die Steuereinheit kann dann aus diesen für die bestimmten Punkte bzw. Bereiche vorgegebenen Geschwindigkeiten, insbesondere Winkelgeschwindigkeiten, für die übrige Bewegungsbahn, beispielsweise durch Interpolation, ermitteln, so dass vorzugsweise ein Geschwindigkeitsprofil für die gesamte Bewegungsbahn vorliegt.

In Figur 3 ist auf der Hochachse die Winkelgeschwindigkeit in Prozent aufgetragen, auf der Querachse der Winkel in Grad. In Figur 2 sind mit V₁, V₂ und V₃ die Geschwindigkeitsprofile über die Bewegungsbahn des Kreisbogenabschnitts über 90 Grad für verschiedene Pendelfrequenzen dargestellt, nämlich der Geschwindigkeitsverlauf V₁ für die Pendelgeschwindigkeit 70 Hz, der Geschwindigkeitsverlauf V₂ für die Pendelgeschwindigkeit 50 Hz und der Geschwindigkeitsverlauf V₃ für die Pendelfrequenz 30 Hz.

In den Umkehrpunkten P₁ und P₅ fällt die Winkelgeschwindigkeit beim Richtungswechsel kurzzeitig auf Null (in Fig. 3 nicht dargestellt). Das Abbremsen der Fördervorrichtung und/oder die Umkehr der Pendel-Bewegungsrichtung kann beispielsweise durch einen mechanischen Anschlag an den Umkehrpunkten erfolgen. Die Dosiervorrichtung 1 kann beispielsweise im Bereich des Abgabeendes 101 seitlich jeweils einen Sensor, wie beispielsweise einen Rollentaster oder Rollenhebel, aufweisen, der das Erreichen des Umkehrpunktes detektiert und vorzugsweise ausgebildet ist, daraufhin die Antriebsrichtung des Antriebs 133 der Fördervorrichtung 100 zur Erzielung der Pendelbewegung zu ändern, beispielsweise über eine Wende-Schützschaltung.

Die Winkelgeschwindigkeit in Prozent im Bereich der Umkehrpunkte wird hier in Figur 3 insbesondere als die Winkelgeschwindigkeit verstanden, die Fördervorrichtung bei ihrer Pendelbewegung kurz vor dem Abbremsen (Wert kurz vor dem Umkehrpunkt P₅ in Figur 3) und nach der (Wieder-)Beschleunigung nach dem Richtungswechsel kurz nach dem Umkehrpunkt (Wert kurz nach dem Umkehrpunkt P₁ in Figur 3) hat.

Die Steuerung kann vorzugsweise jedoch auch durch Vorgabe von Soll-(Winkel-)Geschwindigkeiten in den Umkehrpunkten erfolgen, die von der Steuereinheit dann als Soll-(Winkel-)Geschwindigkeiten im Bereich der Umkehrpunkte, d.h. kurz vor dem Abbremsen und nach der (Wieder-)Beschleunigung nach dem Richtungswechsel benutzt werden.

Wenn beispielsweise aufgrund des ermittelten Gewichts auf der Dosiervorrichtung 1 die Pendelfrequenz verändert werden soll, kann entsprechend der Geschwindigkeitsverlauf angepasst werden, beispielsweise darüber, dass die vorgegebenen Geschwindigkeiten in den Punkten P₁-P₅ mit einem bestimmten Offset versehen werden und die Steuereinheit auf Basis dieser veränderten vorgegebenen Werte einen neuen Geschwindigkeitsverlauf ermittelt.

Auf diese Weise kann eine besonders exakte Dosierung mit einer besonders gleichmäßigen Verteilung des zu trocknenden Gutes auf den nachgelagerten Einheiten erzielt werden.

Die Dosiervorrichtung 1 weist ferner eine Stellkappe 150 mit einer Stellklappenwand 151 auf, die an ihrem oberen Ende 151o an den beiden Seitenwänden 140 befestigt ist und deren unteres Ende 151u einen Abstand zum Obertrum 110 der Förderrichtung 100 aufweist und damit eine Abgabeöffnung definiert, durch die Gut G von der Fördervorrichtung 100 abgegeben werden kann.

Die Stellklappenwand 151 ist zwischen dem oberen Ende 151o und dem unteren ende 151u in Richtung der Förderrichtung R zur Horizontalen geneigt. Die Stellklappe 150 ist um eine horizontale Stellachse am oberen Ende 151o schwenkbar, wodurch auch der Abstand des unteren Endes 151u der Stellklappe 150 vom Obertrum 110 der Fördervorrichtung 100 veränderbar ist. Der Handhabungs- und Fixierabschnitt 152 der Stellklappe 150 dient unter anderem dazu, die Stellklappe 150 und insbesondere die Stellklappenwand 151 in verschiedene Schwenkpositionen zu bewegen und dort zu fixieren.

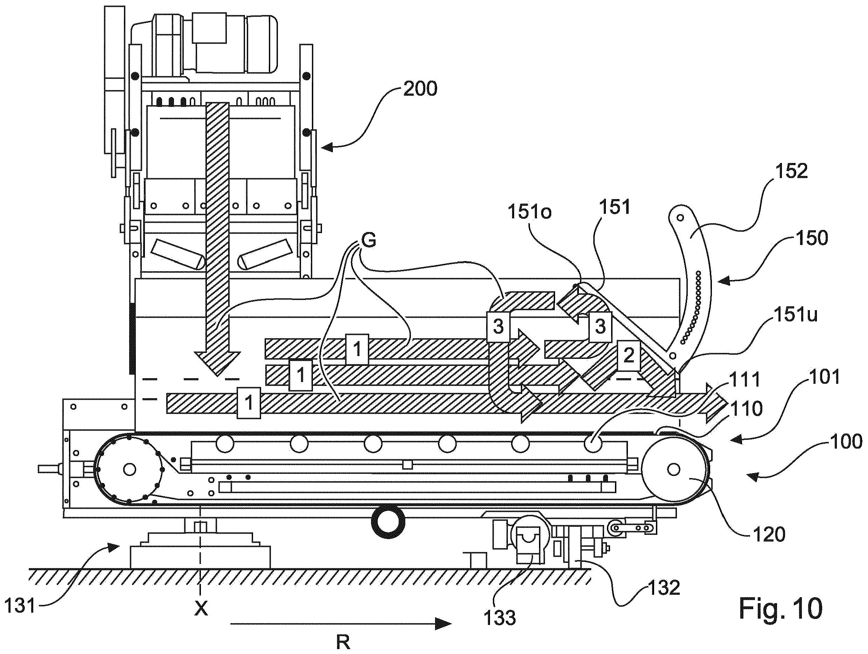

Wie insbesondere in Figur 10 zu erkennen ist, hat die Stellklappe 150 und insbesondere die Neigung der Stellklappenwand 151 zur Horizontalen in Richtung der Förderrichtung R einen positiven Einfluss auf den in Figur 10 schematisch dargestellten Gutfluss. Das Gut G wird von der Zuführeinrichtung 200 auf die Fördervorrichtung 100 aufgegeben und bewegt sich dann zunächst im Wesentlichen entlang der Förderrichtung R zum Abgabeende 101 hin gemäß der mit 1 bezeichneten Pfeile. Durch die Stellklappe 150 wird zum Einen ein Druck auf das Gut G ausgeübt, was mit dem Pfeil 2 in Figur 10 schematisch angedeutet ist. Überschüssiges Gut G, das nicht am Abgabeende 101 abgegeben werden kann, wird durch die geneigte Stellklappe 150 in den Förderprozess zurückgeführt und von neuem Gut G wieder mitgenommen in Richtung der Abgabeöffnung 101, wie in Figur 10 schematisch mit den Pfeilen 3 dargestellt ist. Auf diese Weise wird ein kontinuierlicher Gutfluss in der Dosiervorrichtung erleichtert.

### BEZUGSZEICHEN

- 1: Dosiervorrichtung
- 100: Fördervorrichtung
- 101: Abgabeende
- 110: Obertrum
- 111: Rollen
- 120: Umlenkrolle
- 131: Lagerungsvorrichtung
- 132: Rolle
- 133: Antrieb/Elektromotor
- 140: Seitenwand
- 150: Stellklappe
- 151: Stellklappenwand
- 151o: oberes Ende Stellklappe
- 151u: unteres Ende Stellklappe
- 152: Handhabungs- und Fixierabschnitt
- 160: Wiegezelle
- 200: Zufuhreinrichtung
- G: Gut
- I: Verlauf Seitenwände ohne Öffnung in Förderrichtung
- P₁, P₂, P₃, P₄, P₅: Umkehrpunkt
- R: Förderrichtung
- V₁, V₂, V₃: Geschwindigkeitsprofil
- X: Schwenkachse
- Y: Längsachse

## Patentansprüche

1. Dosiervorrichtung (1) zum Dosieren eines Gutes (G), insbesondere eines zu trocknenden Gutes (G) wie ein Gärsubstrat oder Kot, umfassend
eine Fördervorrichtung (100) zur Förderung von zu trocknendem Gut (G) in einer Förderrichtung (R), wobei auf die Fördervorrichtung (100) zu trocknendes Gut (G) von einer Zufuhreinrichtung (200) zugeführt werden kann und wobei die Fördervorrichtung (100) zu trocknendes Gut (G) an eine nachgelagerte Einheit, wie beispielsweise eine Trocknungsvorrichtung, abgeben kann, und
eine Steuereinheit, die ausgebildet ist, eine Fördergeschwindigkeit der Fördervorrichtung (100) zu steuern,
wobei die Fördervorrichtung (100) um eine vertikale Schwenkachse (X) schwenkbar angeordnet ist, **dadurch gekennzeichnet, dass** die Steuereinheit angeordnet und ausgebildet ist, eine Pendelbewegung, vorzugsweise eine Geschwindigkeit, insbesondere eine Winkelgeschwindigkeit, und/oder eine Frequenz der Pendelbewegung, der Fördervorrichtung (100) um die Schwenkachse zu steuern,
**dadurch gekennzeichnet, dass** die Steuereinheit ausgebildet ist, die Geschwindigkeit der Pendelbewegung der Fördervorrichtung (100) so zu steuern, dass die Geschwindigkeit der Pendelbewegung der Fördervorrichtung (100) im Bereich der Umkehrpunkte (P₁, P₂, P₃, P₄, P₅) einer Bewegungsbahn der Pendelbewegung größer ist als zwischen den Umkehrpunkten (P₁, P₂, P₃, P₄, P₅).

2. Dosiervorrichtung (1) nach Anspruch 1,
**dadurch gekennzeichnet, dass** die Steuereinheit ausgebildet ist, die Pendelbewegung, vorzugsweise eine Geschwindigkeit, insbesondere eine Winkelgeschwindigkeit, und/oder eine Frequenz der Pendelbewegung, der Fördervorrichtung (100) um die Schwenkachse (X) in Abhängigkeit der Fördergeschwindigkeit zu steuern.

3. Dosiervorrichtung (1) nach mindestens einem der vorhergehenden Ansprüche,
**dadurch gekennzeichnet, dass** die Steuereinheit ausgebildet ist, die Geschwindigkeit, insbesondere die Winkelgeschwindigkeit, der Pendelbewegung der Fördervorrichtung (100) um die Schwenkachse (X) entlang einer Bewegungsbahn der Fördervorrichtung (100) zu verändern.

4. Dosiervorrichtung (1) nach mindestens einem der vorhergehenden Ansprüche oder dem Oberbegriff von Anspruch 1,
**dadurch gekennzeichnet, dass** die Steuereinheit ausgebildet ist, die Fördergeschwindigkeit der Fördervorrichtung (100) in Abhängigkeit der Pendelbewegung, vorzugsweise der Geschwindigkeit, insbesondere der Winkelgeschwindigkeit, und/oder der Frequenz der Pendelbewegung, der Fördervorrichtung (100) um die Schwenkachse (X) zu steuern und/oder die Fördergeschwindigkeit der Fördervorrichtung (100) entlang einer Bewegungsbahn der Fördervorrichtung (100) zu verändern.

5. Dosiervorrichtung (1) nach mindestens einem der vorhergehenden Ansprüche,
**dadurch gekennzeichnet, dass** die Steuereinheit ausgebildet ist, die Winkelgeschwindigkeit der Pendelbewegung der Fördervorrichtung (100) so zu steuern, dass die Winkelgeschwindigkeit der Pendelbewegung der Fördervorrichtung (100) im Bereich der Umkehrpunkte (P₁, P₂, P₃, P₄, P₅) einer Bewegungsbahn der Pendelbewegung größer ist, vorzugsweise um ein Vielfaches größer ist, als zwischen den Umkehrpunkten (P₁, P₂, P₃, P₄, P₅), insbesondere an einem Punkt auf halbem Wege der Bewegungsbahn zwischen den Umkehrpunkten (P₁, P₂, P₃, P₄, P₅).

6. Dosiervorrichtung (1) nach mindestens einem der vorhergehenden Ansprüche,
**dadurch gekennzeichnet, dass** die Steuereinheit ausgebildet ist, die Geschwindigkeit, insbesondere die Winkelgeschwindigkeit, der Pendelbewegung der Fördervorrichtung (100) in Abhängigkeit von für bestimmte Punkte der Bewegungsbahn vorgegebenen Geschwindigkeiten, insbesondere Winkelgeschwindigkeiten, für die übrige Bewegungsbahn, insbesondere durch Interpolation, zu ermitteln.

7. Dosiervorrichtung (1) nach mindestens einem der vorhergehenden Ansprüche,
**dadurch gekennzeichnet, dass** die Dosiervorrichtung (1) eine Wiegevorrichtung umfasst, die angeordnet und ausgebildet ist, das Gewicht des auf der Fördervorrichtung (100) befindlichen zu trocknenden Gutes (G) zu ermitteln; und/oder
**dadurch gekennzeichnet, dass** die Fördervorrichtung (100) eine Mehrzahl von Wiegezellen (160) aufweist; und/oder
**dadurch gekennzeichnet, dass** die Fördervorrichtung (100) vier Wiegezellen (160) aufweist, wobei vorzugsweise jeweils zwei Wiegezellen (160) quer zur Förderrichtung (100) beabstandet an einem ersten und an einem zweiten Ende der Fördervorrichtung (100) angeordnet sind.

8. Dosiervorrichtung (1) nach mindestens einem der vorhergehenden Ansprüche,
**dadurch gekennzeichnet, dass** die Steuereinheit ausgebildet ist, die Fördergeschwindigkeit und/oder die Pendelbewegung, vorzugsweise eine Geschwindigkeit, insbesondere eine Winkelgeschwindigkeit, und/oder eine Frequenz der Pendelbewegung, der Fördervorrichtung (100) um die Schwenkachse (X) in Abhängigkeit des Gewichts des auf der Fördervorrichtung (100) befindlichen zu trocknenden Gutes (G) zu steuern.

9. Dosiervorrichtung (1) nach mindestens einem der vorhergehenden Ansprüche,
**dadurch gekennzeichnet, dass** die Steuereinheit ausgebildet ist, in Abhängigkeit des Gewichts des auf der Fördervorrichtung (100) befindlichen zu trocknenden Gutes (G) vorgegebene Geschwindigkeiten mit einem gewichtsabhängigen Offset zu versehen und diesen Offset bei der Ermittlung der Geschwindigkeit, insbesondere die Winkelgeschwindigkeit, der Pendelbewegung der Fördervorrichtung (100) für die übrige Bewegungsbahn, zu berücksichtigen.

10. Dosiervorrichtung (1) nach mindestens einem der vorhergehenden Ansprüche,
**dadurch gekennzeichnet, dass** die Steuereinheit angeordnet und ausgebildet ist, ein Signal oder mehrere Signale, vorzugsweise mit Informationen zu einer oder mehrerer nachgelagerten Einheiten, wie beispielsweise zu deren Fördergeschwindigkeit(en), zu empfangen und die Fördergeschwindigkeit und/oder die Pendelbewegung, vorzugsweise eine Geschwindigkeit, insbesondere eine Winkelgeschwindigkeit, und/oder eine Frequenz der Pendelbewegung, der Fördervorrichtung (100) um die Schwenkachse (X) in Abhängigkeit des empfangenen Signals bzw. der empfangenen Signale zu steuern.

11. Dosiervorrichtung (1) nach mindestens einem der vorhergehenden Ansprüche,
**dadurch gekennzeichnet, dass** die Dosiervorrichtung (1) zwei Seitenwände (140) aufweist, die sich im wesentlichen parallel zur Förderrichtung (R) erstrecken und vorzugsweise zumindest abschnittsweise im wesentlichen vertikal ausgerichtet sind oder um weniger als 30 Grad, insbesondere weniger als 10 Grad, zur Vertikalen geneigt sind.

12. Dosiervorrichtung (1) nach dem vorhergehenden Anspruch,
**dadurch gekennzeichnet, dass** sich die zwei sich im wesentlichen parallel zur Förderrichtung (R) erstreckenden Seitenwände (140) in Förderrichtung (R) um jeweils weniger als 5 Grad, insbesondere um jeweils 1 Grad, öffnen.

13. Dosiervorrichtung (1) nach mindestens einem der vorhergehenden Ansprüche,
**dadurch gekennzeichnet, dass** die Dosiervorrichtung (1) eine im Wesentlichen quer zur Förderrichtung (R) angeordnete Stellklappe (150) aufweist, die vorzugsweise an den zwei Seitenwänden (140) befestigt ist.

14. Dosiervorrichtung (1) nach dem vorhergehenden Anspruch,
**dadurch gekennzeichnet, dass** die Stellklappe (150) um eine horizontale Stellachse (X) schwenkbar ist und vorzugsweise in verschiedenen Schwenkpositionen fixierbar ist; und/oder
**dadurch gekennzeichnet, dass** die Stellachse (150) derart angeordnet ist, dass ein unteres Ende der Stellklappe (151u) um die Stellachse (X) schwenkbar ist, so dass die Stellachse (X) eine oder mehrere Schwenkpositionen einnehmen kann, in der die Stellklappe (150) von einem oberen Ende (151o) zu einem unteren Ende (15u) in Richtung der Förderrichtung (R) geneigt ist; und/oder
**dadurch gekennzeichnet, dass** die Stellklappe (150) derart ausgebildet und angeordnet ist, dass ein Mindestabstand zwischen der Stellklappe (150) und der Fördervorrichtung (100) nicht unterschritten und/oder ein Maximalabstand zwischen der Stellklappe (150) und der Fördervorrichtung (100) nicht überschritten wird.

15. Verfahren zum Dosieren eines Gutes (G), insbesondere eines zu trocknenden Gutes (G) wie ein Gärsubstrat oder Kot, umfassend
- Fördern von auf eine Fördervorrichtung (100) zugeführtem zu trocknendem Gut (G) in einer Förderrichtung (R),
- Steuern einer Fördergeschwindigkeit der Fördervorrichtung (100), und
- Steuern einer Pendelbewegung, vorzugsweise einer Geschwindigkeit, insbesondere einer Winkelgeschwindigkeit, und/oder einer Pendelfrequenz der Pendelbewegung, der Fördervorrichtung (100) um eine vertikale Schwenkachse (X) der Fördervorrichtung (100),
- Steuern einer Geschwindigkeit der Pendelbewegung der Fördervorrichtung (100), so dass die Geschwindigkeit der Pendelbewegung der Fördervorrichtung (100) im Bereich der Umkehrpunkte (P1, P2, P3, P4, P5) einer Bewegungsbahn der Pendelbewegung größer ist als zwischen den Umkehrpunkten (P1, P2, P3, P4, P5).

## Claims

1. A metering device (1) for metering a material (G), in particular a material (G) to be dried such as a fermentation substrate or manure, comprising
a conveying device (100) for conveying material (G) to be dried in a conveying direction (R), wherein material (G) to be dried may be fed onto the conveying device (100) by a feed means (200) and wherein the conveying device (100) may discharge material (G) to be dried to a downstream unit, such as for example a drying device, and a control unit, which is configured to control a conveying velocity of the conveying device (100),
wherein the conveying device (100) is arranged so as to be pivotable about a vertical pivot axis (X), **characterised in that** the control unit is arranged and configured to control an oscillating motion, preferably a velocity, in particular an angular velocity, and/or a frequency of the oscillating motion, of the conveying device (100) about the pivot axis,
**characterised in that** the control unit is configured to control the velocity of the oscillating motion of the conveying device (100) in such a way that the velocity of the oscillating motion of the conveying device (100) is greater in the region of the reversal points (P₁, P₂, P₃, P₄, P₅) of a trajectory of the oscillating motion than between the reversal points (P₁, P₂, P₃, P₄, P₅).

2. A metering device (1) according to claim 1,
**characterised in that** the control unit is configured to control the oscillating motion, preferably a velocity, in particular an angular velocity, and/or a frequency of the oscillating motion, of the conveying device (100) about the pivot axis (X) as a function of conveying velocity.

3. A metering device (1) according to at least one of the preceding claims,
**characterised in that** the control unit is configured to vary the velocity, in particular the angular velocity, of the oscillating motion of the conveying device (100) about the pivot axis (X) along a trajectory of the conveying device (100).

4. A metering device (1) according to at least one of the preceding claims or the precharacterising clause of claim 1,
**characterised in that** the control unit is configured to control the conveying velocity of the conveying device (100) as a function of the oscillating motion, preferably the velocity, in particular the angular velocity, and/or the frequency of the oscillating motion, of the conveying device (100) about the pivot axis (X) and/or to vary the conveying velocity of the conveying device (100) along a trajectory of the conveying device (100).

5. A metering device (1) according to at least one of the preceding claims,
**characterised in that** the control unit is configured to control the angular velocity of the oscillating motion of the conveying device (100) in such a way that the angular velocity of the oscillating motion of the conveying device (100) is greater, preferably greater by a multiple, in the region of the reversal points (P₁, P₂, P₃, P₄, P₅) of a trajectory of the oscillating motion than between the reversal points (P₁, P₂, P₃, P₄, P₅), in particular at a point halfway along the trajectory between the reversal points (P₁, P₂, P₃, P₄, P₅).

6. A metering device (1) according to at least one of the preceding claims,
**characterised in that** the control unit is configured to determine, in particular by interpolation, for the rest of the trajectory, the velocity, in particular the angular velocity, of the oscillating motion of the conveying device (100) as a function of velocities, in particular angular velocities, predetermined for specific points of the trajectory.

7. A metering device (1) according to at least one of the preceding claims,
**characterised in that** the metering device (1) comprises a weighing device, which is arranged and configured to determine the weight of the material (G) to be dried located on the conveying device (100); and/or
**characterised in that** the conveying device (100) has a plurality of weighing cells (160); and/or **characterised in that** the conveying device (100) has four weighing cells (160), wherein preferably in each case two weighing cells (160) are arranged transversely of the conveying direction (100) spacedly at a first and a second end of the conveying device (100) .

8. A metering device (1) according to at least one of the preceding claims,
**characterised in that** the control unit is configured to control the conveying velocity and/or the oscillating motion, preferably a velocity, in particular an angular velocity, and/or a frequency of the oscillating motion, of the conveying device (100) about the pivot axis (X) as a function of the weight of the material (G) to be dried located on the conveying device (100).

9. A metering device (1) according to at least one of the preceding claims,
**characterised in that** the control unit is configured to provide predetermined velocities with a weight-dependent offset as a function of the weight of the material (G) to be dried located on the conveying device (100) and to take account of this offset when determining the velocity, in particular the angular velocity, of the oscillating motion of the conveying device (100) for the rest of the trajectory.

10. A metering device (1) according to at least one of the preceding claims,
**characterised in that** the control unit is arranged and configured to receive a signal or plurality of signals, preferably with information relating to one or more downstream units, such as for example relating to the conveying velocity(ies) thereof, and to control the conveying velocity and/or the oscillating motion, preferably a velocity, in particular an angular velocity, and/or a frequency of the oscillating motion, of the conveying device (100) about the pivot axis (X) as a function of the received signal or the received signals.

11. A metering device (1) according to at least one of the preceding claims,
**characterised in that** the metering device (1) has two side walls (140), which extend substantially parallel to the conveying direction (R) and are preferably oriented substantially vertically at least in places or are inclined by less than 30 degrees, in particular less than 10 degrees, to the vertical.

12. A metering device (1) according to the preceding claim,
**characterised in that** the two side walls (140) extending substantially parallel to the conveying direction (R) open out in the conveying direction (R) by in each case less than 5 degrees, in particular by in each case 1 degree.

13. A metering device (1) according to at least one of the preceding claims,
**characterised in that** the metering device (1) has a butterfly valve (150) arranged substantially transversely of the conveying direction (R), which butterfly valve is preferably fastened to the two side walls (140).

14. A metering device (1) according to the preceding claim,
**characterised in that** the butterfly valve (150) is pivotable about a horizontal adjusting axis (X) and preferably fixable in various pivot positions; and/or **characterised in that** the adjusting axis (150) is arranged in such a way that a lower end of the butterfly valve (151u) is pivotable about the adjusting axis (X) such that the adjusting axis (X) may adopt one or more pivot positions in which the butterfly valve (150) is inclined from an upper end (151o) to a lower end (15u) in the direction of the conveying direction (R); and/or
**characterised in that** the butterfly valve (150) is configured and arranged in such a way that a minimum distance between the butterfly valve (150) and the conveying device (100) is not fallen below and/or a maximum distance between the butterfly valve(150) and the conveying device (100) is not exceeded.

15. A method for metering a material (G), in particular a material (G) to be dried such as a fermentation substrate or manure, comprising
- conveying material (G) to be dried, which has been fed onto a conveying device (100), in a conveying direction (R),
- controlling a conveying velocity of the conveying device (100), and
- controlling an oscillating motion, preferably a velocity, in particular an angular velocity, and/or an oscillation frequency of the oscillating motion, of the conveying device (100) about a vertical pivot axis (X) of the conveying device (100),
- controlling a velocity of the oscillating motion of the conveying device (100) such that the velocity of the oscillating motion of the conveying device (100) is greater in the region of the reversal points (P₁, P₂, P₃, P₄, P₅) of a trajectory of the oscillating motion than between the reversal points (P₁, P₂, P₃, P₄, P₅).

## Revendications

1. Dispositif de dosage (1) pour le dosage d'un produit (G), plus particulièrement d'un produit à sécher (G) comme un substrat de fermentation ou des déjections, comprenant un dispositif de convoyage (100) pour le convoyage d'un produit à sécher (G) dans une direction de convoyage (R), le produit à sécher (G) pouvant être introduit sur le dispositif de convoyage (100) par un dispositif d'alimentation (200) et le dispositif de convoyage (100) pouvant déposer le produit à sécher (G) au niveau d'une unité disposée en aval, par exemple un dispositif de séchage, et une unité de commande qui est conçue pour contrôler une vitesse de convoyage du dispositif de convoyage (100),
le dispositif de convoyage (100) étant disposé de manière pivotante autour d'un axe de pivotement vertical (X), **caractérisé en ce que** l'unité de commande est disposée et conçue pour contrôler un mouvement pendulaire, de préférence une vitesse, plus particulièrement une vitesse angulaire et/ou une fréquence du mouvement pendulaire, du dispositif de convoyage (100) autour de l'axe de pivotement,
**caractérisé en ce que** l'unité de commande est conçue pour contrôler la vitesse du mouvement pendulaire du dispositif de convoyage (100) de façon à ce que la vitesse du mouvement pendulaire du dispositif de convoyage (100) soit plus grande au niveau de points d'inversion (P₁, P₂, P₃, P₄, P₅) d'une trajectoire de mouvement du mouvement pendulaire qu'entre les points d'inversion (P₁, P₂, P₃, P₄, P₅).

2. Dispositif de dosage (1) selon la revendication 1,
**caractérisé en ce que** l'unité de commande est conçue pour contrôler le mouvement pendulaire, de préférence une vitesse, plus particulièrement une vitesse angulaire et/ou une fréquence du mouvement pendulaire, du dispositif de convoyage (100) autour de l'axe de pivotement (X) en fonction de la vitesse de convoyage.

3. Dispositif de dosage (1) selon au moins l'une des revendications précédentes, **caractérisé en ce que** l'unité de commande est conçue pour modifier la vitesse, plus particulièrement la vitesse angulaire, du mouvement pendulaire du dispositif de convoyage (100) autour de l'axe de pivotement (X) le long d'une trajectoire de mouvement du dispositif de convoyage (100).

4. Dispositif de dosage (1) selon au moins l'une des revendications précédentes ou le concept principal de la revendication 1,
**caractérisé en ce que** l'unité de commande est conçue pour contrôler la vitesse de convoyage du dispositif de convoyage (100) en fonction du mouvement pendulaire, de préférence de la vitesse, plus particulièrement de la vitesse angulaire et/ou de la fréquence du mouvement pendulaire, du dispositif de convoyage (100) autour de l'axe de pivotement (X) et/ou pour modifier la vitesse de convoyage du dispositif de convoyage (100) le long d'une trajectoire de mouvement du dispositif de convoyage (100).

5. Dispositif de dosage (1) selon au moins l'une des revendications précédentes, **caractérisé en ce que** l'unité de commande est conçue pour contrôler la vitesse angulaire du mouvement pendulaire du dispositif de convoyage (100) de façon à ce que la vitesse angulaire du mouvement pendulaire du dispositif de convoyage (100) soit plus grande au niveau des points d'inversion (P₁, P₂, P₃, P₄, P₅) d'une trajectoire de mouvement du mouvement pendulaire, de préférence plusieurs fois supérieure à la vitesse angulaire entre les points d'inversion (P₁, P₂, P₃, P₄, P₅), plus particulièrement au niveau d'un point à mi-chemin de la trajectoire de mouvement entre les points d'inversion (P₁, P₂, P₃, P₄, P₅).

6. Dispositif de dosage (1) selon au moins l'une des revendications précédentes, **caractérisé en ce que** l'unité de commande est conçue pour déterminer la vitesse, plus particulièrement la vitesse angulaire, du mouvement pendulaire du dispositif de convoyage (100) en fonction de vitesses prédéterminées pour des points déterminés de la trajectoire de mouvement, plus particulièrement de vitesses angulaires, pour le reste de la trajectoire de mouvement, plus particulièrement par interpolation.

7. Dispositif de dosage (1) selon au moins l'une des revendications précédentes, **caractérisé en ce que** le dispositif de dosage (1) comprend un dispositif de pesage qui est disposé et conçu pour déterminer le poids du produit à sécher (G) se trouvant sur le dispositif de convoyage (100) ; et/ou
**caractérisé en ce que** le dispositif de convoyage (100) comprend une pluralité de cellules de pesée (160) ; et/ou
**caractérisé en ce que** le dispositif de convoyage (100) comprend quatre cellules de pesée (160), de préférence deux cellules de pesée (160) étant disposées de manière éloignée transversalement par rapport à la direction de convoyage (100), respectivement au niveau d'une première et d'une deuxième extrémité du dispositif de convoyage (100).

8. Dispositif de dosage (1) selon au moins l'une des revendications précédentes, **caractérisé en ce que** l'unité de commande est conçue pour contrôler la vitesse de convoyage et/ou le mouvement pendulaire, de préférence une vitesse, plus particulièrement une vitesse angulaire et/ou une fréquence du mouvement pendulaire, du dispositif de convoyage (100) autour de l'axe de pivotement (X) en fonction du poids du produit à sécher (G) se trouvant sur le dispositif de convoyage (100).

9. Dispositif de dosage (1) selon au moins l'une des revendications précédentes, **caractérisé en ce que** l'unité de commande est conçue pour donner, en fonction du poids du produit à sécher (G) se trouvant sur le dispositif de convoyage (100), des vitesses prédéterminées avec un décalage dépendant du poids et pour prendre en compte ce décalage lors de la détermination de la vitesse, plus particulièrement de la vitesse angulaire, du mouvement pendulaire du dispositif de convoyage (100) pour le reste de la trajectoire de mouvement.

10. Dispositif de dosage (1) selon au moins l'une des revendications précédentes, **caractérisé en ce que** l'unité de commande est disposée et conçue pour recevoir un signal ou plusieurs signaux, de préférence avec des informations concernant une ou plusieurs unités disposées en aval, par exemple concernant leur(s) vitesse(s) de convoyage, et pour contrôler la vitesse de convoyage et/ou le mouvement pendulaire, de préférence une vitesse, plus particulièrement une vitesse angulaire et/ou une fréquence du mouvement pendulaire, du dispositif de convoyage (100) autour de l'axe de pivotement (X) en fonction du signal reçu ou des signaux reçus.

11. Dispositif de dosage (1) selon au moins l'une des revendications précédentes, **caractérisé en ce que** le dispositif de dosage (1) comprend deux parois latérales (140) qui s'étendent globalement parallèlement à la direction de convoyage (R) et qui sont de préférence orientées globalement verticalement, au moins à certains endroits, ou sont inclinées de moins de 30 degrés, plus particulièrement de moins de 10 degrés, par rapport à la verticale.

12. Dispositif de dosage (1) selon la revendication précédente, **caractérisé en ce que** les deux parois latérales (140) s'étendant globalement parallèlement à la direction de convoyage (R) s'ouvrent chacune dans la direction de convoyage (R) de moins de 5 degrés, plus particulièrement de 1 degré.

13. Dispositif de dosage (1) selon au moins l'une des revendications précédentes, **caractérisé en ce que** le dispositif de dosage (1) comprend un clapet de réglage (150) disposé globalement transversalement par rapport à al direction de convoyage (R), qui est fixé de préférence aux deux parois latérales (140).

14. Dispositif de dosage (1) selon la revendication précédente,
**caractérisé en ce que** le clapet de réglage (150) peut pivoter autour d'un axe de réglage horizontal (X) et peut être fixé de préférence dans différentes positions de pivotement ; et/ou
**caractérisé en ce que** l'axe de réglage (150) est disposé de façon à ce qu'une extrémité inférieure du clapet de réglage (151u) puisse pivoter autour de l'axe de réglage (X), de façon à ce que l'axe de réglage (X) puisse prendre une ou plusieurs positions de pivotement, dans lesquelles le clapet de réglage (150) est incliné, d'une extrémité supérieure (151o) à une extrémité inférieure (15u) en direction de la direction de convoyage (R) ; et/ou
**caractérisé en ce que** le clapet de réglage (150) est conçu et disposé de façon à ce qu'une distance entre le clapet de réglage (150) et le dispositif de convoyage (100) ne tombe pas en dessous d'une distance minimale et/ou qu'une distance maximale entre le clapet de réglage (150) et le dispositif de convoyage (100) ne soit pas dépassée.

15. Procédé de dosage d'un produit (G), plus particulièrement d'un produit à sécher (G) comme un substrat de fermentation ou des déjections, comprenant :
- le convoyage du produit à sécher (G) introduit sur un dispositif de convoyage (100) dans une direction de convoyage (R),
- le contrôle d'une vitesse de convoyage du dispositif de convoyage (100) et
- le contrôle d'un mouvement pendulaire, de préférence d'une vitesse, plus particulièrement d'une vitesse angulaire et/ou d'une fréquence pendulaire du mouvement pendulaire, du dispositif de convoyage (100) autour d'un axe de pivotement vertical (X) du dispositif de convoyage (100),
- le contrôle d'une vitesse du mouvement pendulaire du dispositif de convoyage (100) de façon à ce que la vitesse du mouvement pendulaire du dispositif de convoyage (100) soit plus grande au niveau des points d'inversion (P₁, P₂, P₃, P₄, P₅) d'une trajectoire de mouvement du mouvement pendulaire qu'entre les points d'inversion (P₁, P₂, P₃, P₄, P₅).
